# FASCICULE DE BREVET EUROPEEN

(11) **EP 0 884 516 B1**
(45) Date de publication et mention de la délivrance du brevet: **10.12.2003**
(21) Numéro de dépôt: 98401128.8
(22) Date de dépôt: 12.05.1998
(51) Int. Cl.: F16L 7/00, F16L 11/06, H02G 3/04, H02G 9/06, G02B 6/44

(54) **Tube en matière plastique, en particulier destiné à servir de gaine pour le passage de cables ou de canalisations, et couronne d'un tel tube**
Kunststoffrohr, insbesondere zur Verwendung in Kabel- oder Rohrdürchführung und Rolle für solches Rohr
Plastic pipe, in particular used for supporting cables or pipes and coil of such a pipe

(30) Priorité: 13.06.1997 FR 9707318
(43) Date de publication de la demande: 16.12.1998
(73) Titulaire: Alphacan, 78170 La Celle-Saint-Cloud (FR)
(72) Inventeur: Mestres, Philippe, 58660 Coulanges les Nevers (FR); Tremillon, Jean-Michel, 78400 Chatou (FR)
(74) Mandataire: Michardière, Bernard

(56) Documents cités:
- DE-A- 3 224 934
- FR-A- 2 455 972
- GB-A- 2 295 499
- US-A- 4 744 695
- US-A- 4 892 442

## Description

L'invention est relative à un tube en matière plastique rigide , en particulier destiné à servir de gaine pour le passage de câbles ou de canalisations.

L'utilisation de tels tubes se répand de plus en plus, par exemple dans les télécommunications, en raison des nombreux avantages qu'elle présente notamment facilité de mise en place des câbles, canalisations ou fibres optiques dans les tubes une fois que ceux-ci ont été installés, par exemple enterrés dans une tranchée.

Il est souhaitable de réduire le plus possible le nombre de raccords entre les tubes, d'une part pour réduire le temps nécessaire à la mise en place des tubes, et, d'autre part, pour éviter toute aspérité intérieure susceptible de gêner l'introduction d'un furet et/ou des câbles ou autres. Aussi, plutôt que d'utiliser des tronçons rectilignes de tubes de longueur déterminée à raccorder, on préfère utiliser un tube de grande longueur enroulé à froid sur un touret . On peut ainsi dérouler et mettre en place d'un seul tenant des longueurs importantes de tube pouvant dépasser plusieurs centaines de mètres.

Des solutions connues permettant un enroulement sur touret sont des solutions utilisant des polyoléfines. Toutefois les conduites polyoléfines ont un coefficient de frottement relativement élevé, défavorable à la mise en place de câbles par tirage . De plus la tenue à la pression interne des polyoléfines n'est pas des meilleures.

On a donc cherché à réaliser des tubes en matière plastique rigide, en particulier en PVC rigide,ayant un coefficient de frottement plus faible et une meilleure tenue à la pression interne.

Un problème délicat se pose car l'enroulement d'un tube en matière plastique rigide sur un touret, suivant un rayon de courbure relativement petit, peut conduire à un effondrement de la section du tube qui se traduit par un pliage de ce tube et entraîne des déformations permanentes irréversibles. Il en résulte une ovalisation importante de la section, inacceptable pour l'introduction ultérieure d'un furet et des câbles ou canalisations. Ce phénomène d'effondrement de la section est généralement appelé "croquage".

Pour des diamètres externes de tube relativement faibles, de l'ordre de 25 à 30 mm, on arrive encore à enrouler à froid, c'est à dire à température ambiante, un tube en matière plastique rigide, par exemple en PVC rigide, sur un touret dont le moyeu a un diamètre relativement faible (d'environ 1,60 m), en évitant le phénomène de croquage et en évitant également un écrasement important du tube susceptible d'empêcher le passage d'un furet lors de son utilisation.

Mais on souhaite disposer de tubes dont le diamètre externe soit supérieur à 30 mm et de préférence égal ou supérieur à 40 mm , et pour lesquels l'enroulement reste possible sur des tourets dont le moyeu conserve un diamètre acceptable.

L'invention a pour but , surtout, de résoudre ce problème, à un prix de revient aussi faible que possible.

L'invention concerne également des tubes en matière plastique rigide destinés à véhiculer des fluides, tubes dont il est souhaitable que la section résiste le mieux possible à l'écrasement, par exemple lorsqu'il s'agit de tubes enterrés.

Selon l'invention, un tube en matière plastique rigide, en particulier destiné à servir de gaine pour le passage de câbles, de canalisations ou de fibres:
comprend les caractéristiques de la revendication 1.

Avantageusement, l'ovalisation créée par l'enroulement du tube suivant un tel rayon est suffisamment faible pour être réversible.

L'ovalisation permanente créée, le cas échéant, par l'enroulement du tube suivant un tel rayon de courbure est inférieure à 2 % du diamètre externe du tube.

La structure composite est une structure tricouche, à savoir une couche externe, une couche intermédiaire et une couche interne, les couches externe et interne étant réalisées en une matière plastique plus rigide que celle de la couche intermédiaire relativement souple, et la rigidité, en particulier le module d'élasticité des couches externe et interne, étant choisie pour que le tube présente la résistance souhaitée aux sollicitations mécaniques, telles que celles créées lors de l'enroulement ou par une pression interne, et/ou à l'écrasement, en particulier lorsque ce tube est enterré.

Avantageusement, le tube est apte à être enroulé, sans déformation permanente sensible de sa section circulaire, suivant un rayon de courbure au plus égal à trente fois (30 fois) le diamètre externe du tube.

Le module d'élasticité des couches externe et interne est de préférence au moins égal à 2.5 GPa (2.5 x 10⁹ Pa).

Le module d'élasticité de la couche intermédiaire est au plus égal à 80% du module de la couche externe et/ou interne.

Avantageusement, la couche externe et/ou la couche interne sont réalisées en PVC (polychlorure de vinyle) rigide. La couche intermédiaire est réalisée en un PVC additivé, en particulier avec un taux important de copolymère ou polymère de bas module, par exemple inférieur à 1/10ème du module du PVC rigide, de l'ordre de 20 % en poids, ou de plastifiant , de l'ordre de 15% en poids.

La couche externe et/ou la couche interne peuvent être réalisées en un thermopolymère chargé.

Les couches de la structure peuvent être réalisées en des matières plastiques non compatibles réunies entre elles par un ou plusieurs liants appropriés.

Le rapport de l'épaisseur moyenne de la couche interne à l'épaisseur moyenne de la couche externe est de préférence compris entre 0,5 et 1,5.

Un tube en matière plastique conforme à l'invention, dont la section a un diamètre extérieur de 40 mm, est apte à être enroulé à froid sur un touret dont le moyeu a un diamètre de 1,60 m sans que la section circulaire du tube subisse une déformation permanente sensible.

L'invention concerne également une couronne réalisée avec un tube tel que défini précédemment, comportant au moins une spire complète, en particulier au moins dix spires complètes, caractérisée par le fait que le rayon de courbure de la (des) spire(s) est au plus égal à cinquante fois (50 fois) le diamètre externe du tube, en particulier au plus égal à trente fois (30 fois) le diamètre externe du tube.

Une telle couronne réalisée avec un tube de diamètre extérieur égal à 40 mm est enroulée en spires dont le rayon de courbure est d'environ 0,80 m, le tube étant en particulier enroulé sur un touret dont le moyeu a un diamètre de 1,60 m.

L'invention est plus explicitement décrite ci-après à propos d'un exemple de réalisation avec référence au dessin ci-annexé.
La Figure 1, de ce dessin, est une vue schématique en élévation, avec parties en coupe, d'un touret sur lequel est enroulé un tube selon l'invention.
La Figure 2 montre un tronçon de tube classique courbé qui a subi une déformation irréversible.
La Figure 3 est une section suivant la ligne III-III de la Figure 2.
La Figure 4 est une section transversale d'un tube à structure tricouche selon l'invention.
La Figure 5, enfin, est un schéma correspondant à une ovalisation de section.

L'invention concerne un tube 1 en matière plastique rigide en particulier destiné à servir de gaine pour le passage de câbles , de canalisations ou de fibres optiques, notamment pour les télécommunications.

Comme expliqué initialement, il est souhaitable de disposer de grandes longueurs ( plusieurs centaines de mètres) de tube 1. Il est donc souhaitable que ce tube puisse être enroulé à froid sur un touret 2 ayant un moyeu 3 dont le diamètre extérieur D définit le diamètre minimum, et le rayon de courbure, de la nappe enroulée de tuyau 1 située radialement vers l'intérieur.

En outre, la surface interne du tube 1 doit présenter un bon coefficient de glissement pour faciliter l'introduction et la mise en place des câbles ou canalisations à l'intérieur de ce tube 1. L'ob tention d'un bon coefficient de glissement implique, pratiquement, d'utiliser une matière relativement rigide 5 par exemple du PVC rigide. Par contre, une matière telle que le polyéthylène ou une polyoléfine conduit à un frottement relativement élevé, inacceptable pour le type d'application évoqué.

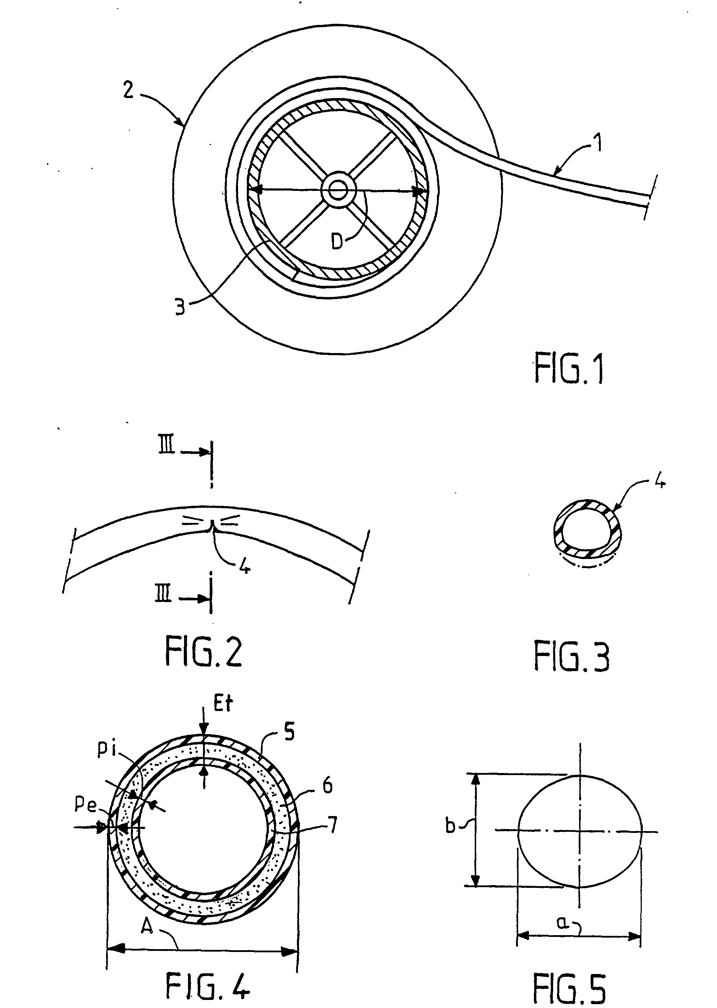

L'enroulement du tube en un matériau de base relativement rigide, PVC rigide par exemple, sur un touret, puis son déroulement, doivent pouvoir s'effectuer à froid sans encourir le risque de "croquage" exposé précédemment. Le "croquage" se traduit par un pliage du tube , comme illustré schématiquement dans la zone 4 sur la Figure 2. Ce pliage entraîne des déformations permanentes irréversibles de la section transversale du tube. La section, circulaire initialement, se trouve fortement ovalisée comme illustré sur la Figure 3 rendant impossible l'utilisation d'un furet dans ce tube pour pouvoir ensuite passer les câbles ou canalisations.

Jusqu'à ce jour, avec des tubes classiques compacts monocouches en PVC rigide ayant des diamètres extérieurs de l'ordre de 25 à 30 mm, on est arrivé avec plus ou moins de difficultés à enrouler ces tubes sur des tourets dont le moyeu a un diamètre D d'environ 1, 60 m. Pour des diamètres plus importants, l'enroulement sans déformation inacceptable ne devient plus possible sur des tourets classiques ( moyeu de diamètre 1,60m ).

L'épaisseur du tube est généralement imposée par des conditions de tenue à une pression interne déterminée, qui peut atteindre 15 bars dans l'exemple de tubes utilisés comme gaines pour le passage de câbles. Cette pression de 15 bars correspond à une injection d'air comprimé destinée à débloquer un furet qui a pu se coincer dans le tube. Cette épaisseur minimale complique le problème d'enroulement à résoudre.

Selon l'invention, le tube en matière plastique 1, pour pouvoir être enroulé sans phénomène de "croquage", comporte comme illustré sur la Figure 4 une structure composite prévue pour qu'un enroulement du tube soit possible sans efforts trop importants. En outre cette structure composite est prévue pour que la section transversale du tube 1 ait une bonne rigidité pour résister à l'écrasement créé par l'effort de compression qui apparaît lors de l'enroulement du tube. Le tube 1 est apte à être enroulé, sans déformation sensible de sa section circulaire, suivant un rayon de courbure au plus égal à cinquante fois (50 fois), et de préférence au plus égal à trente fois ( 30 fois), son diamètre externe A. Des tubes de diamètre externe 40 mm ont été fabriqués et enroulés, sans déformation sensible de section, sur un touret avec moyeu de diamètre D égal à 1,60 m.

Par déformation sensible de la section on désigne une ovalisation permanente qui se traduit, comme illustré sur la Figure 5, par une section ayant un grand axe de longueur a et un petit axe de longueur b. La déformation est considérée comme négligeable et acceptable tant que l'ovalisation permanente reste inférieure à 2 %, c'est-à-dire que la différence ( a - b ) reste inférieure à 0,02a.

La structure composite est une structure tricouche à savoir une couche externe 5, ou ) peau, une couche intermédiaire ou médiane 6 et une couche interne 7. La couche externe 5 et la couche interne 7 sont réalisées en une matière plastique plus rigide que celle de la couche intermédiaire 6 relativement souple.

La nature des différents constituants de cette structure, en particulier pour le module d'élasticité des couches externe 5 et interne 7, est choisie pour que le tube 1 présente la résistance souhaitée aux sollicitations mécaniques lors de son enroulement.

Le module d'élasticité des couches externe 5 et interne 7 est au moins égal à 2.5 GPa (2.5 x 10⁹ Pa).

Le module d'élasticité de la couche intermédiaire 6 est au plus égal à 80% du module de la couche externe et/ou interne.

La structure composite selon l'invention permet de concilier, dans le tube 1, deux caractéristiques qui a priori pouvaient sembler contradictoires, à savoir une rigidité "annulaire", permettant à la section de supporter les efforts d'écrasement, et une souplesse "longitudinale" permettant en particulier l'allongement des fibres tendues ( au sens mécanicien du terme) du tube à l'enroulement, fibres qui sont situées dans la couche externe 5.

Pour une capacité imposée de résistance du tube à une pression interne, la structure composite selon l'invention permet de donner à la couche externe 5, dont certaines des fibres sont soumises à l'allongement lors de l'enroulement, une épaisseur réduite ce qui diminue ainsi la résistance à l'allongement de cette couche externe 5. L'enroulement est ainsi facilité, sans réduction de la rigidité "annulaire" qui aurait entraîné une déformation de la section.

La couche intermédiaire 6, relativement souple, sert de remplissage pour écarter radialement les couches 5 et 7. La souplesse de cette couche 6 permet un déplacement dans le sens longitudinal ou axial de la couche 5 relativement à la couche 7, sans entraîner d'efforts trop importants.

La couche intermédiaire 7 transmet à la couche externe 5 les efforts orientés radialement, créés par la pression à l'intérieur du tube.

La couche externe 5 peut être réalisée en la même matière que la couche interne 7, cette matière étant compatible avec celle de la couche intermédiaire 6. Le tube à structure tricouche peut être fabriqué par extrusion dans une installation avec bloc de co-extrusion par exemple telle que décrite dans FR-A-2 455 972. Cependant, les matières des différentes couches peuvent être différentes tout en étant compatibles.

Il est également possible d'utiliser pour les différentes couches du tube des matières non compatibles réunies entre elles par des liants appropriés.

Une solution avantageuse consiste à réaliser la couche externe 5 et la couche interne 7 en PVC ayant un module d'élasticité supérieur à 2,5 GPa, notamment de l'ordre de 3,3 GPa.

La couche intermédiaire 6 est réalisée en un PVC plus souple.

Selon une première possibilité la couche médiane 6 est constituée d'un PVC additivé d'assouplissants formés par des polymères ou copolymères du PVC, le plus important pour cette utilisation étant le polyacétate de vinyle. Il est également possible d'utiliser du ) polybutyral de vinyle ou un polyalcool de vinyle, tous compatibles avec le PVC.

Cette couche médiane 6 peut être réalisée suivant un mélange en poids d'environ 80 % de PVC et de 20 % de copolymère.

Selon une autre possibilité, la couche médiane 6 est réalisée en un PVC additivé avec des plastifiants tels que des phtalates.

Pour assouplir le PVC de la couche médiane, on peut utiliser d'autres additifs tels que le DOP (di-octylphtalate) ou le DBP (di-butylphtalate) ou des paraffines chlorées ou des polyéthylènes chlorés.

L'utilisation d'un copolymère pour assouplir la couche médiane 6 est préférée par rapport à l'utilisation d'un plastifiant car ce dernier subit une exsudation ou une diffusion, et est moins stable dans le temps.

Le rapport de l'épaisseur moyenne pi de la couche interne 7 à l'épaisseur moyenne pe de la couche externe 5 est de préférence compris entre 0,5 et 1,5 ( 0,5 ≤ pi/pe ≤ 1,5 ).

En désignant par Et l'épaisseur totale moyenne de la structure tricouche, comme illustré sur la Figure 4, on définit un coefficient x = ( pe + pi )/ Et, coefficient qui sera utilisé un peu plus loin dans un compte-rendu d'essais.

Ce rapport x de la somme de l'épaisseur moyenne pi de la couche interne 7 et de l'épaisseur moyenne pe de la couche externe 5 à l'épaisseur totale moyenne Et du tube est avantageusement compris entre 0,3 et 0,6.

D'une manière générale la couche interne 7 doit être réalisée en une matière dont le module d'élasticité est le plus proche possible de celui de la couche externe 5 si les deux couches sont réalisées en des matières différentes ; en tout cas, le module d'élasticité de la couche interne 7 doit être supérieur à celui de la couche médiane 6.

La répartition en épaisseur des différentes couches permet de donner aux structures de tubes ainsi formés des caractéristiques d'enroulement et de résistance à l'écrasement à chaque fois différentes pour répondre à des cas particuliers.

On peut imaginer des structures comportant trois matériaux ayant des caractéristiques propres différentes conférant ainsi à l'ensemble des caractéristiques particulières.

Ces caractéristiques, outre la tenue à la pression interne généralement prise en charge principalement par la couche interne 7, peuvent comprendre la résistance à l'impact, la tenue en traction du tube complet, etc.

Des essais ont été effectués avec fabrication de tubes à structure tricouche selon l'invention.

Un tube de diamètre extérieur égal à 50mm a pu être enroulé sur un moyeu de diamètre 1,90m.

Des tubes de diamètre extérieur 40 mm ont été enroulés à froid sur des tourets dont le diamètre du moyeu était de 1,60 m. Deux séries de tubes de diamètre 40mm ont été fabriquées : une série avec une couche intermédiaire 6 en PVC additivé de DOP, défini précédemment, et une autre série avec une couche intermédiaire 6 en PVC additivé de copolymère acétate de vinyle. Les caractéristiques géométriques et mécaniques , pour les deux séries, étaient sensiblement les mêmes et sont données ci-après.

L'épaisseur totale moyenne Et (Fig. 4) de la structure tricouche était voisine de 2,7 mm, pour un coefficient x (défini précédemment) de l'ordre de 0,43. La densité globale du tube était d'environ 1,4 Kg/m3.

La rigidité annulaire RS de la section, mesurée à 10 % d'écrasement, exprimée en KN/m2 (KiloNewton / mètre carré) était de l'ordre de 80 KN/m2.

L'ovalisation de la section du tube en sortie de ligne de fabrication, avant enroulement, était très faible de l'ordre de 0,7 % du diamètre extérieur du tube.

L'enroulement à froid de ces tubes sur les tourets, puis le déroulement ultérieur pour la mise en place de ces tubes a donné toute satisfaction, sans créer d'ovalisation inacceptable de la section du tube. Il a ensuite été possible d'utiliser un furet dans ces tubes pour y faire passer des câbles.

Un essai comparatif préalable, ayant conduit à une rigidité annulaire RS mesurée à 10 % d'écrasement nettement plus faible, de l'ordre de 54 KN/m2, n'avait pas donné un résultat satisfaisant, le furet n'ayant pu passer dans le tube à section déformée par l'enroulement.

Ces essais montrent que la rigidité annulaire RS du tube est importante pour éviter l'écrasement des spires lors de l'enroulement à froid du tube sur un touret. De préférence cette rigidité annulaire RS à 10% d'écrasement est supérieure à 70 KN/m2.

D'autres essais comparatifs entre un tube en PVC compact et un tube selon l'invention ont été effectués, ces deux tubes ayant des caractéristiques dimensionnelles ( diamètre et épaisseur ) identiques.

Les mesures de rigidité annulaire effectuées montrent des rigidités équivalentes , pour des déformations faibles, jusqu'à environ 10% du diamètre du tube , comme cela apparaît d'après le tableau qui suit.

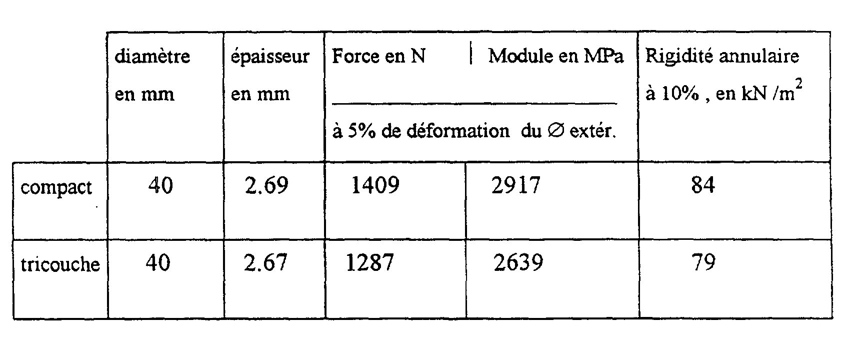

On a en outre effectué une mesure en flexion axiale de la manière suivante : on a pris, pour chaque type de tube, un tronçon rectiligne, et on l'a posé horizontalement sur deux appuis simples séparés par une distance L ; on a ensuite exercé sur ce tronçon, à mi-distance des appuis, une force verticale entraînant une déflexion du tronçon par rapport à l'horizontale. On a mesuré la force provoquant, à mi-distance des appuis (distance entre appuis : 200 mm), une déflexion ou flèche de 15% du diamètre D du tube( déflexion égale à 0.15D ). La déflexion a été choisie pour qu'elle corresponde sensiblement à celle créée en enroulant le tube sur un moyeu de 1.60 m.

Cette mesure en flexion axiale ( suivant l'axe du tube) a montré que la force nécessaire pour l'enroulement d'un tube sur un touret dont le moyeu a un diamètre de 1.60 m est nettement plus faible pour la structure tricouche selon l'invention que pour un tube compact:

Force à 15% de déflexion ( déflexion correspondant à un enroulement sur un moyeu de diamètre 1.60 m) :

| | |
|---|---|
| tube compact | 1206 N |
| tube tricouche | 959 N |

A partir de courbes de rigidité, on peut déduire que si l'on applique intégralement cet effort à une section circulaire des deux structures comparées (compact et tricouche), la déformation de cette section aura une amplitude ( différence entre le grand axe et le petit axe de la section ) de:
1.8 mm pour le compact
1.5 mm pour le tube tricouche

La déformation est nettement plus faible dans le cas du tube tricouche car, alors que les rigidités annulaires du compact et du tricouche sont équivalentes, l'effort appliqué à la section , lié à l'enroulement du tube sur le touret, est plus faible dans le cas du tube à structure tricouche que dans le cas du tube compact.

Il est à noter que cette déformation estimée de la section du tube enroulé est une déformation en majeure partie élastique et que, lorsque le tube est déroulé, la section reprend une forme plus proche du cercle.

Un tube tricouche selon l'invention présente donc l'avantage supplémentaire de nécessiter une force d'enroulement inférieure à celle nécessaire pour un tube compact de même diamètre.

Comme avantages du PVC rigide on peut citer, outre le faible coefficient de frottement et la bonne tenue à la pression interne déjà mentionnés : la facilité de collage permettant des réparations rapides et simples, et une mise bout à bout de deux longueurs de tubes ; une limite élastique élevée intéressante dans toutes les opérations de traction qui sont utiles lors de la pose des tubes.

Les explications ont été fournies essentiellement à l'égard de tubes en matière plastique rigide pour le passage de câbles ou de canalisations. Il est clair cependant que l'invention présente un intérêt considérable pour tous les tubes en matière plastique rigide dont on souhaite une longueur aussi grande que possible et qui doivent présenter une résistance à l'écrasement suffisante, par exemple lorsqu'ils sont enterrés en tranchées. L'invention permet d'éviter une altération de la forme de leur section circulaire due à l'enroulement.

## Revendications

1. Tube en matière plastique rigide , en particulier destiné à servir de gaine pour le passage de câbles ou de canalisations,
comportant une structure composite tricouche (5,6,7) à savoir une couche externe (5), une couche intermédiaire (6) et une couche interne (7), les couches externe (5) et interne (7) étant réalisées en une matière plastique plus rigide que celle de la couche intermédiaire relativement souple, et la rigidité, en particulier le module d'élasticité des couches externe et interne étant choisi pour que le tube présente la résistance souhaitée aux sollicitations mécaniques, que la section transversale du tube ait une bonne rigidité pour résister à l'écrasement, et qu'un enroulement du tube soit possible sans efforts trop importants, et qui
est apte à être enroulé, suivant un rayon de courbure au plus égal à cinquante fois le diamètre externe du tube, sans déformation permanente sensible de sa section circulaire, l'ovalisation permanente de section créée par l'enroulement du tube étant inférieure à 2 % du diamètre externe du tube.

2. Tube selon la revendication 1, **caractérisé par le fait qu'**il est apte à être enroulé, sans déformation permanente sensible de sa section circulaire, suivant un rayon de courbure au plus égal à trente fois le diamètre externe du tube.

3. Tube selon la revendication 1 ou 2, **caractérisé par le fait que** le diamètre externe du tube est supérieur à 20mm, et en particulier au moins égal à 40mm .

4. Tube selon l'une des revendications précédentes, **caractérisé par le fait que** le module d'élasticité des couches externe et interne est au moins égal à 2.5 GPa (2.5 x 10⁹ Pa).

5. Tube selon l'une des revendications précédentes, **caractérisé par le fait que** le module d'élasticité de la couche intermédiaire (6) est au plus égal à 80% du module de la couche externe (5) et/ou interne (7).

6. Tube selon l'une des revendications précédentes, **caractérisé par le fait que** la couche externe (5) et/ou la couche interne (7) sont réalisées en PVC rigide.

7. Tube selon la revendication 6, **caractérisé par le fait que** la couche intermédiaire (6) est réalisée en un PVC additivé d'assouplissants formés par des copolymères ou polymères du PVC, notamment du polyacétate de vinyle ou du polybutyral de vinyle ou un polyalcool de vinyle, en particulier suivant un mélange en poids d'environ 80 % de PVC et de 20 % de copolymère ou polymère.

8. Tube selon la revendication 7, **caractérisé par le fait que** la couche intermédiaire (6) est réalisée en un PVC additivé avec des plastifiants tels que des phtalates, ou avec des additifs tels que le DOP (di-octylphtalate) ou le DBP (di-butylphtalate) ou des paraffines chlorées ou des polyéthylènes chlorés.

9. Tube selon l'une quelconque des revendications précédentes , **caractérisé par le fait que** le rapport (x) de la somme de l'épaisseur moyenne (pi) de la couche interne (7) et de l'épaisseur moyenne (pe) de la couche externe (5) à l'épaisseur totale moyenne (Et) du tube est compris entre 0,3 et 0,6.

10. Tube selon la revendication 9, **caractérisé par le fait que** le rapport (pi/pe) de l'épaisseur moyenne de la couche interne (7) à l'épaisseur moyenne de la couche externe (5) est compris entre 0,5 et 1,5.

11. Tube selon l'une des revendications précédentes, **caractérisé par le fait qu** ' il a un diamètre extérieur de 40 mm et est apte à être enroulé à froid sur un touret dont le moyeu a un diamètre de 1,60 m sans que la section circulaire du tube subisse une déformation permanente sensible.

12. Couronne réalisée avec un tube selon l'une des revendications précédentes, comportant au moins une spire complète, en particulier au moins dix spires complètes, **caractérisée par le fait que** le rayon de courbure de la (des) spire(s) est au plus égal à cinquante fois le diamètre externe du tube, en particulier au plus égal à trente fois le diamètre externe du tube.

13. Couronne selon la revendication 12 , **caractérisée par le fait qu'**elle est réalisée avec un tube de diamètre extérieur égal à 40 mm, enroulé en spires dont le rayon de courbure est d'environ 0,80 m , en particulier enroulé sur un touret dont le moyeu a un diamètre de 1,60m.

## Claims

1. Rigid plastic tube, in particular for use as a duct for the passage of cables or pipes, which comprises a three-layer composite structure (5, 6, 7), namely an outer layer (5), an interlayer (6) and an inner layer (7), the outer layer (5) and inner layer (7) being made of a more rigid plastic than that of the relatively flexible interlayer and the rigidity, in particular the elastic modulus, of the outer and inner layers being chosen so that the tube has the desired resistance to mechanical stresses, so that the cross section of the tube has good rigidity, in order to resist being crushed, and so that it is possible for the tube to be wound without excessively high forces, and which can be wound, with a radius of curvature at most equal to fifty times the outside diameter of the tube, without appreciable permanent deformation of its circular cross section, the permanent cross-sectional ovalization created by winding the tube being less than 2% of the outside diameter of the tube.

2. Tube according to Claim 1, **characterized in that** it can be wound, without appreciable permanent deformation of its circular cross section, with a radius of curvature at most equal to thirty times the outside diameter of the tube.

3. Tube according to Claim 1 or 2, **characterized in that** the outside diameter of the tube is greater than 20 mm, and in particular at least 40 mm.

4. Tube according to any one of the preceding claims, **characterized in that** the elastic modulus of the outer and inner layers is at least 2.5 GPa (2.5 x 10⁹ Pa).

5. Tube according to one of the preceding claims, **characterized in that** the elastic modulus of the interlayer (6) is at most equal to 80% of the modulus of the outer layer (5) and/or inner layer (7).

6. Tube according to one of the preceding claims, **characterized in that** the outer layer (5) and/or the inner layer (7) are made of rigid PVC.

7. Tube according to Claim 6, **characterized in that** the interlayer (6) is made of a PVC to which flexiblizers have been added, the said flexiblizers being formed by PVC polymers or copolymers, especially polyvinyl acetate or polyvinyl butyral or a polyvinyl alcohol, in particular as a blend of around 80% PVC and 20% copolymer or polymer by weight.

8. Tube according to Claim 7, **characterized in that** the interlayer (6) is made of a PVC to which plasticizers, such as phthalates, or additives, such as DOP (dioctyl phthalate) or DBP (dibutyl phthalate) or chlorinated paraffins or chlorinated polyethylenes, have been added.

9. Tube according to any one of the preceding claims, **characterized in that** the ratio (x) of the sum of the mean thickness (pi) of the inner layer (7) and the mean thickness (pe) of the outer layer (5) to the mean total thickness (Et) of the tube is between 0.3 and 0.6.

10. Tube according to Claim 9, **characterized in that** the ratio (pi/pe) of the mean thickness of the inner layer (7) to the mean thickness of the outer layer (5) is between 0.5 and 1.5.

11. Tube according to one of the preceding claims, **characterized in that** it has an outside diameter of 40 mm and can be wound cold onto a drum whose hub has a diameter of 1.60 m without the circular cross section of the tube undergoing appreciable permanent deformation.

12. Coil made with a tube according to one of the preceding claims, comprising at least one complete turn, in particular at least ten complete turns, **characterized in that** the radius of curvature of the turn(s) is at most equal to fifty times the outside diameter of the tube, in particular at most equal to thirty times the outside diameter of the tube.

13. Coil according to Claim 12, **characterized in that** it is made with a tube having an outside diameter of 40 mm, wound in turns whose radius of curvature is about 0.80 m, in particular wound on a drum whose hub has a diameter of 1.60 m.

## Patentansprüche

1. Rohr aus steifem Kunststoff, das insbesondere als Hülle für den Durchtritt von Kabeln oder Leitungen dienen soll und eine dreilagige Verbundstruktur (5, 6, 7) aufweist, das heißt eine Außenschicht (5), eine Zwischenschicht (6) und eine Innenschicht (7), wobei die Außenschicht (5) und die Innenschicht (7) aus einem steiferen Kunststoff gefertigt sind als die vergleichsweise biegsame Zwischenschicht, und wobei die Steifheit, insbesondere das Elastizitätsmodul der Außen- und Innenschicht so gewählt wird, dass das Rohr die gewünschte Festigkeit gegen mechanische Beanspruchungen aufweist, dass der Querschnitt des Rohrs eine gute Festigkeit aufweist, um einem Zerquetschen zu widerstehen, und dass ein Aufrollen des Rohrs ohne zu große Kraftaufwendung möglich ist, und das in der Lage ist, längs eines Krümmungsradius, der höchstens gleich dem Fünfzigfachen des Außendurchmessers des Rohres ist, ohne merkliche, dauerhafte Deformation seines kreisförmigen Querschnitts aufgerollt zu werden, wobei die Ovalisierung des Querschnitts, die durch das Aufrollen des Rohrs erzeugt wird, kleiner als 2% des Außendurchmessers des Rohrs ist.

2. Rohr nach Anspruch 1, **dadurch gekennzeichnet, dass** es ohne merkliche dauerhafte Deformation seines kreisförmigen Querschnitts längs eines Krümmungsradius aufgerollt werden kann, der höchstens gleich dem Dreißigfachen des Außendurchmessers des Rohrs ist.

3. Rohr nach Anspruch 1 oder 2, **dadurch gekennzeichnet, dass** der Außendurchmesser des Rohrs größer als 20 mm und insbesondere zumindest gleich 40 mm ist.

4. Rohr nach einem der vorhergehenden Ansprüche, **dadurch gekennzeichnet, dass** das Elastizitätsmodul der Außen- und Innenschicht zumindest gleich 2,5 GPa (2,5 * 10⁹ Pa) ist.

5. Rohr nach einem der vorhergehenden Ansprüche, **dadurch gekennzeichnet, dass** das Elastizitätsmodul der Zwischenschicht (6) höchstens gleich 80% des Moduls der Außenschicht (5) und/oder Innenschicht (7) ist.

6. Rohr nach einem der vorhergehenden Ansprüche, **dadurch gekennzeichnet, dass** die Außenschicht (5) und/oder die Innenschicht (7) aus steifem PVC hergestellt sind.

7. Rohr nach Anspruch 6, **dadurch gekennzeichnet, dass** die Zwischenschicht (6) aus einem PVC mit Additiven aus Weichmachern hergestellt wird, die aus Copolymeren oder Polymeren des PVC bestehen, insbesondere Polyvinylacetat oder Polyvinylbutyral oder einem Polyvinylalkohol, insbesondere entsprechend einem Gemisch aus ungefähr 80 Gewichtsprozent PVC und 20 Gewichtsprozent an Copolymer oder Polymer.

8. Rohr nach Anspruch 7, **dadurch gekennzeichnet, dass** die Zwischenschicht (6) aus einem PVC mit plastifizierenden Additiven wie Phthalaten oder Additiven wie DOP (Dioctylphthalat) oder DBP (Dibutylphthalat) oder chlorierten Paraffinen oder chlorierten Polyethylenen hergestellt wird.

9. Rohr nach einem der vorhergehenden Ansprüche, **dadurch gekennzeichnet, dass** das Verhältnis (x) der Summe der mittleren Dicke (pi) der Innenschicht (7) und der mittleren Dicke (pe) der Außenschicht (5) zu der mittleren Gesamtdicke des Rohrs (Et) zwischen 0,3 und 0,6 liegt.

10. Rohr nach Anspruch 9, **dadurch gekennzeichnet, dass** das Verhältnis (pi/pe) der mittleren Dicke der Innenschicht (7) zu der mittleren Dicke der Außenschicht (5) zwischen 0,5 und 1,5 liegt.

11. Rohr nach einem der vorhergehenden Ansprüche, **dadurch gekennzeichnet, dass** es einen Außendurchmesser von 40 mm aufweist und kalt auf eine Rolle aufgerollt werden kann, deren Nabe einen Durchmesser von 1,60 m besitzt, ohne dass der kreisförmige Querschnitt des Rohrs eine merkliche, dauerhafte Deformation erfährt.

12. Kranz, der aus einem Rohr nach einem der vorhergehenden Ansprüche hergestellt ist, mit zumindest einer kompletten Spirale, insbesondere zumindest zehn kompletten Spiralen, **dadurch gekennzeichnet, dass** der Krümmungsradius der Spirale (n) höchstens gleich dem Fünfzigfachen des Außendurchmessers des Rohrs, insbesondere höchstens gleich dem Dreißigfachen des Außendurchmessers des Rohrs ist.

13. Kranz nach Anspruch 12, **dadurch gekennzeichnet, dass** er mit einem Rohr mit einem Außendurchmesser gleich 40 mm hergestellt ist und in Spiralen aufgerollt ist, deren Krümmungsradius etwa 0,80 m beträgt, und insbesondere auf einer Rolle aufgerollt ist, deren Nabe einen Durchmesser von 1,60 m besitzt.
